(19) Europäisches Patentamt
European Patent Office
Office européen des brevets

(11) EP 4 559 975 A1

# (12) EUROPEAN PATENT APPLICATION

(43) Date of publication:
**28.05.2025 Bulletin 2025/22**

(21) Application number: **23211076.7**

(22) Date of filing: **21.11.2023**

(51) International Patent Classification (IPC):
***C08L 69/00*** *(2006.01)*

(52) Cooperative Patent Classification (CPC):
(C-Sets available)
**C08L 69/00;** C08K 2003/2227; C08K 2003/2282
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SHPP Global Technologies B.V.**
**4612 PX Bergen op Zoom (NL)**

(72) Inventors:
- **CHEN, Keran**
  **Shanghai (CN)**
- **LIU, Xing**
  **Shanghai (CN)**
- **ZHENG, Yun**
  **Shanghai (CN)**

(74) Representative: **Modiano, Gabriella Diana et al**
**Modiano & Partners SA**
**Steinsdorfstraße 14**
**80538 München (DE)**

## (54) FLAME RETARDANT POLYCARBONATE/POLYBUTYLENE TEREPHTHALATE COMPOSITIONS HAVING GOOD HYDRO-STABILITY AND LOW TEMPERATURE IMPACT PERFORMANCE

(57) Thermoplastic compositions include: (a) from about 35 wt% to about 65 wt% of a polycarbonate homopolymer component; (b) from about 0.1 wt% to about 30 wt% of a polybutylene terephthalate component; (c) from about 0.1 wt% to about 5 wt% of an aluminum hydroxide oxide component; and (d) from about 0.1 wt% to about 20 wt% of a flame retardant (FR) component. The combined weight percent value of all components does not exceed 100 wt%, and all weight percent values are based on the total weight of the composition. The compositions have improved hydro-stability and low temperature impact properties.



Processed by Luminess, 75001 PARIS (FR)

(Cont. next page)

(52) Cooperative Patent Classification (CPC): (Cont.)

C-Sets
**C08L 69/00, C08L 67/02, C08L 51/00,**
**C08K 5/3492, C08K 3/22;**
**C08L 69/00, C08L 69/005, C08L 67/02,**
**C08L 51/00, C08K 5/3492, C08K 3/22;**
**C08L 69/00, C08L 83/10, C08L 67/02, C08L 51/00,**
**C08K 5/523, C08K 3/22**

## Description

### FIELD OF THE DISCLOSURE

The present disclosure relates to polycarbonate (PC) and polybutylene terephthalate (PBT) compositions, and in particular to PC/PBT compositions including an aluminum hydroxide oxide component that have improved hydro-stability and low temperature impact properties.

### BACKGROUND OF THE DISCLOSURE

Polycarbonate (PC) and polybutylene terephthalate (PBT) polymer blends are widely used in different application areas such as connectors, outdoor equipment housing, automotive and outdoor vehicles and devices. Unfortunately, PC/PBT polymer blends typically have relatively poor impact performance at low temperatures and poor hydro-stability after treatment at 85 °C and 85% relative humidity (RH) due to degradation of the polymer chains. These restrictions limit the usage of PC/PBT blends in certain applications.

These and other shortcomings are addressed by aspects of the present disclosure.

### SUMMARY

Aspects of the disclosure relate to thermoplastic compositions including: (a) from about 35 wt% to about 65 wt% of a polycarbonate homopolymer component; (b) from about 0.1 wt% to about 30 wt% of a polybutylene terephthalate component; (c) from about 0.1 wt% to about 5 wt% of an aluminum hydroxide oxide component; and (d) from about 0.1 wt% to about 20 wt% of a flame retardant (FR) component. The combined weight percent value of all components does not exceed 100 wt%, and all weight percent values are based on the total weight of the composition. The compositions have improved hydro-stability and low temperature impact properties.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when

values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average.

Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

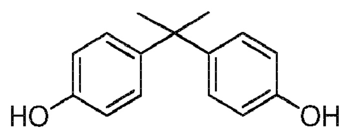

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure include a thermoplastic composition including: (a) from about 35 wt% to about 65 wt% of a polycarbonate homopolymer component; (b) from about 0.1 wt% to about 30 wt% of a polybutylene terephthalate component; (c) from about 0.1 wt% to about 5 wt% of an aluminum hydroxide oxide component; and (d) from about 0.1 wt% to about 20 wt% of a flame retardant (FR) component. The combined weight percent value of all components does not exceed 100 wt%, and all weight percent values are based on the total weight of the composition.

The polycarbonate homopolymer component may include bisphenol-A (BPA) homopolymer in some aspects. Suitable polycarbonate homopolymers are available from SABIC. In some aspects the composition includes from about 35 wt% to about 65 wt% of the polycarbonate homopolymer component. In other aspects the composition includes at least 35 wt%, at least 37 wt%, at least 39 wt%, at least 41 wt%, at least 43 wt%, at least 45 wt%, at least 47 wt%, at least 49 wt%, at least 51 wt%, at least 53 wt%, at most 65 wt%, at most 63 wt%, at most 61 wt%, at most 59 wt%, at most 57 wt%, at most 55 wt%, at most 53 wt%, at most 51 wt%, at most 49 wt%, at most 47 wt%, or at most 45 wt% of the polycarbonate homopolymer component.

As used herein, "polybutylene terephthalate" (PBT) can be used interchangeably with poly(1,4-butylene terephthalate). Polybutylene terephthalate a polyester. Polyesters, which include poly(alkylene dicarboxylates), liquid crystalline polyesters, and polyester copolymers, can be useful in the thermoplastic compositions of the present

disclosure. In some aspects the composition includes from about 0.1 wt% to about 30 wt% of a polybutylene terephthalate component. In further aspects the composition includes at least 0.1 wt%, at least 0.5 wt%, at least 1 wt%, at least 3 wt%, at least 5 wt%, at least 7 wt%, at least 9 wt%, at least 11 wt%, at least 13 wt%, at least 15 wt%, at most 30 wt%, at most 28 wt%, at most 26 wt%, at most 24 wt%, at most 22 wt%, at most 20 wt%, at most 18 wt%, or at most 16 wt% of the polybutylene terephthalate component.

The aluminum hydroxide oxide component may include, but is not limited to, boehmite. It is believed that the well-dispersed layered structure of aluminum oxide hydroxide (e.g., boehmite) may allow the compositions according to the disclosure to have improved hydro-stability and impact properties, especially at low temperatures. In conventional PC/PBT compositions a chain extender such as cycloaliphatic epoxy, oligomers of styrene and glycidyl methacrylate, and epoxysilane are added to improve the hydro-stability of the composition. These properties may be further improved in compositions according to aspects of the disclosure including an aluminum hydroxide oxide component.

The composition may include from about 0.1 wt% to about 5 wt% of the aluminum hydroxide oxide component in some aspects. In other aspects the composition includes at least 0.3 wt%, at least 0.5 wt%, at least 0.7 wt%, at least 0.9 wt%, at least 1.1 wt%, at least 1.3 wt%, at least 1.5 wt%, at least 1.7 wt%, at least 1.9 wt%, at least 2.1 wt%, at least 2.3 wt%, at least 2.5 wt%, at least 2.7 wt%, at least 2.9 wt%, at most 5 wt%, at most 4.8 wt%, at most 4.6 wt%, at most 4.4 wt%, at most 4.2 wt%, at most 4 wt%, at most 3.8 wt%, at most 3.6 wt%, at most 3.4 wt%, at most 3.2 wt%, at most 3 wt%, at most 2.8 wt%, at most 2.6 wt%, at most 2.4 wt%, at most 2.2 wt%, or at most 2 wt%, of the aluminum hydroxide oxide component.

In some aspects a weight ratio of the flame retardant component to the aluminum hydroxide oxide component is from 2:1 to 10:1. In further aspects a weight ratio of the flame retardant component to the aluminum hydroxide oxide component is from 3:1 to 10:1, or from 4:1 to 10:1, or from 5:1 to 10:1, or from 6:1 to 10:1, or from 7:1 to 10:1, or from 3:1 to 9:1, or from 3:1 to 8:1.

In some aspects the composition further includes a polycarbonate copolymer component. In certain aspects the polycarbonate copolymer component is present in an amount of from greater than 0 wt% to about 30 wt%. In further aspects the polycarbonate copolymer component is present in an amount of at least 1 wt%, at least 3 wt%, at least 5 wt%, at least 7 wt%, at least 9 wt%, at least 11 wt%, at least 13 wt%, at least 15 wt%, at most 30 wt%, at most 28 wt%, at most 26 wt%, at most 24 wt%, at most 22 wt%, at most 20 wt%, or at most 18 wt%.

The polycarbonate copolymer component may include a copolyestercarbonate in some aspects. The copolyestercarbonate copolymer may include ester units of the formula

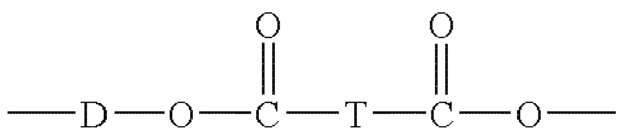

wherein D is a divalent group derived from a dihydroxy compound, and may be, for example, a $C_{2-30}$ alkylene group, a $C_{3-30}$ alicyclic group, a $C_{6-30}$ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a $C_{2-30}$ alkylene group, a $C_{6-30}$ alicyclic group, a $C_{6-30}$ alkyl aromatic group, or a $C_{6-30}$ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a $C_{2-6}$ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula

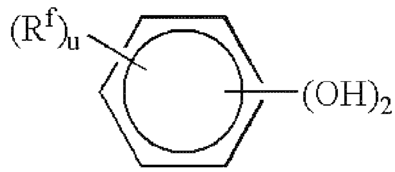

wherein each $R^f$ is independently $C_{1-12}$ alkyl, or halogen, and u is 0 to 4. It will be understood that $R^f$ is hydrogen when u is 0.

Typically, the halogen can be chlorine or bromine. In an aspect, compounds in which the -OH groups are substituted meta to one another, and wherein $R^f$ and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below:

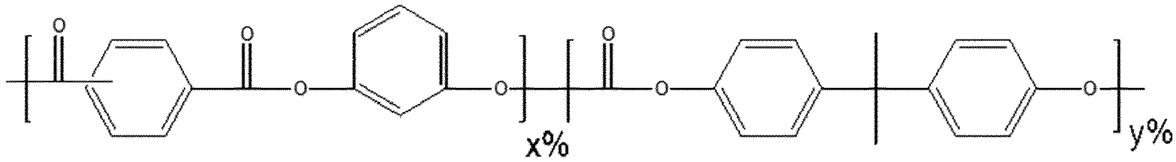

wherein x is the mole % of the ITR ester block and y is the mole % of the polycarbonate block. An exemplary copolyestercarbonate copolymer is SLX 20/80 resin, available from SABIC. SLX 20/80 includes 20 mole % ITR blocks and 80 mole % PC blocks.

In yet further aspects the copolyestercarbonate copolymer has a mole % ratio of ITR ester units to polycarbonate monomer units of from about 15:85 to about 95:5, or from about 20:80 to about 90:10, or from about 15:85 to about 25:75, or from about 18:82 to about 22:78, or about 20:80, or from about 85:15 to about 95:5, or from about 88:12 to about 92:8, or about 90:10.

In some aspects the polycarbonate copolymer component includes a polycarbonate-siloxane copolymer having a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC).

In certain aspects the composition includes from greater than 0 wt% to about 20 wt% of an impact modifier component. In particular aspects the composition includes at least 0.1 wt%, or at least 0.5 wt%, or at least 1 wt%, or at least 3 wt%, or at least 5 wt%, or at least 7 wt%, or at least 9 wt%, or at least 11 wt%, or at least 13 wt%, or at least 15 wt%, or at most 20 wt%, or at most 18 wt%, or at most 16 wt%, or at most 14 wt%, of the impact modifier component. In specific aspects the impact modifier component includes a core-shell acrylic polymer.

The composition includes from about 0.1 wt% to about 20 wt% of a flame retardant (FR) component in some aspects. In other aspects the composition includes at least 0.5 wt%, or at 1 wt%, or at least 3 wt%, or at least 5 wt%, or at least 7 wt%, or at least 9 wt%, or at least 11 wt%, or at least 13 wt%, or at most 20 wt%, or at most 18 wt%, or at most 16 wt%, of the FR component. The FR component may include, but is not limited to, a brominated FR component, a phosphorus FR component, or a combination thereof.

In yet further aspects the composition further includes from greater than 0 wt% to about 2 wt% of an additional FR component including a polytetrafluoroethylene (PTFE) component. In certain aspects the composition includes at least 0.1 wt%, at least 0.3 wt%, at most 2 wt%, at most 1.8 wt%, at most 1.6 wt%, at most 1.4 wt%, at most 1.2 wt%, at most 1 wt%, at most 0.8 wt%, or at most 0.6 wt%, of the PTFE component.

In yet further aspects the composition further includes from greater than 0 wt% to about 5 wt% of an additional FR synergist component including $Sb_2O_3$. In certain aspects the composition includes at least 0.5 wt%, at least 1.0 wt%, at most 4.0 wt%, at most 3.0 wt%, at most 2.0 wt% of $Sb_2O_3$.

The composition includes at least one additional additive in some aspects. The at least one additional additive

may include, but is not limited to, an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a reinforcing agent, or a combination thereof.

In some aspects the composition has:

(a) a notched Izod impact strength (NII) retention of at least 75%, or at least 80%, after 250 hours of heat aging at a temperature of 85 °C and 85% relative humidity;
(b) an NII retention of at least 55% after 500 hours of heat aging at a temperature of 85 °C and 85% relative humidity; or
(c) an NII retention of at least 8%, or at least 10%, after 1000 hours of heat aging at a temperature of 85 °C and 85% relative humidity.

NII is evaluated according to ASTM D256 at 25 °C.

In further aspects the composition has an NII retention of at least 60%, or at least 65%, or at least 70%, after 500 hours of heat aging at a temperature of 85 °C and 85% relative humidity.

In specific aspects the composition has an NII retention of at least 10%, or at least 12%, or at least 14%, or at least 16%, or at least 18%, or at least 20% after 1000 hours of heat aging at a temperature of 85 °C and 85% relative humidity.

In certain aspects the composition includes a phosphorous-based flame retardant instead of a bromine-based flame retardant and has an NII retention of at least 4%, or at least 5%, or at least 6%, or at least 7%, or at least 8%, or at least 8.5%, after 500 hours of heat aging at a temperature of 85 °C and 85% relative humidity.

In yet further aspects the composition includes a phosphorous-based flame retardant instead of a bromine-based flame retardant and has MW retention of at least 25%, or at least 30%, or at least 35%, or at least 40%, or at least 45%, or at least 50%, or at least 55%, or at least 60%, or at least 65%, after 500 hours of heat aging at a temperature of 85 °C and 85% relative humidity.

In further aspects the composition includes from greater than 0 wt% to about 20 wt% of a polycarbonate copolymer component, and the polycarbonate homopolymer component (a) has a molecular weight (Mw) retention of at least 70% after 1000 hours of heat aging at a temperature of 85 °C and 85% relative humidity. Mw is determined using a Waters e2695 high-performance liquid chromatography (HPLC) system using a hexafluoro-2-propanol/chloroform solvent at 35 °C. In further aspects the polycarbonate homopolymer component (a) has a Mw retention of at least 71%, or at least 72%, after 1000 hours of heat aging at a temperature of 85 °C and 85% relative humidity.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a building material, a personal accessory, an energy storage device, an electrical device, or a vehicle interior.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

(a) from about 35 wt% to about 65 wt% of a polycarbonate homopolymer component;
(b) from about 0.1 wt% to about 30 wt% of a polybutylene terephthalate component;
(c) from about 0.1 wt% to about 5 wt% of an aluminum hydroxide oxide component; and
(d) from about 0.1 wt% to about 20 wt% of a flame retardant (FR) component,

wherein the combined weight percent value of all components does not exceed 100 wt%, and all weight percent values are based on the total weight of the composition.

Aspect 2. The thermoplastic composition according to Aspect 1, wherein the aluminum hydroxide oxide component comprises boehmite.

Aspect 3. The thermoplastic composition according to Aspect 1 or 2, wherein a weight ratio of the flame retardant component to the aluminum hydroxide oxide component is from 2:1 to 10:1.

Aspect 4. The thermoplastic composition according to any of Aspects 1 to 3, wherein the composition further comprises from greater than 0 wt% to about 30 wt% of a polycarbonate copolymer component.

Aspect 5. The thermoplastic composition according to Aspect 4, wherein the polycarbonate copolymer component comprises from about 15-25 mole % ITR ester units and from about 75-85 mole % polycarbonate monomer units.

Aspect 6. The thermoplastic composition according to Aspect 4, wherein the polycarbonate copolymer component comprises a polycarbonate-siloxane copolymer, wherein the polycarbonate-siloxane copolymer has a siloxane content of from about 5 wt% to about 45 wt%, based on the total weight of the polycarbonate-siloxane copolymer component.

Aspect 7. The thermoplastic composition according to any of Aspects 1 to 6, wherein the composition comprises from greater than 0 wt% to about 20 wt% of an impact modifier component.

Aspect 8. The thermoplastic composition according to Aspect 7, wherein the impact modifier component comprises a core-shell acrylic polymer.

Aspect 9. The thermoplastic composition according to any of Aspects 1 to 8, wherein the FR component comprises a brominated FR component, a phosphorus FR component, or a combination thereof.

Aspect 10. The thermoplastic composition according to any of Aspects 1 to 9, wherein the composition further comprises from greater than 0 wt% to about 2 wt% of an additional FR component comprising a polytetrafluoroethylene (PTFE) component.

Aspect 11. The thermoplastic composition according to any of Aspects 1 to 10, wherein the composition further comprises at least one additional additive.

Aspect 12. The thermoplastic composition according to Aspect 11, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a reinforcing agent, or a combination thereof.

Aspect 13. The thermoplastic composition according to any of Aspects 1 to 12, wherein the composition has:

(a) a notched Izod impact strength (NII) retention of at least 75%, or at least 80%, after 250 hours of heat aging at a temperature of 85 °C and 85% relative humidity;
(b) an NII retention of at least 55% after 500 hours of heat aging at a temperature of 85 °C and 85% relative humidity; or
(c) an NII retention of at least 8%, or at least 10%, after 1000 hours of heat aging at a temperature of 85 °C and 85%

relative humidity,

wherein NII is evaluated according to ASTM D256 at 25 °C.

Aspect 14. The thermoplastic composition according to any of Aspects 1 to 13, wherein:

the composition comprises from greater than 0 wt% to about 20 wt% of a polycarbonate copolymer component;
the polycarbonate homopolymer component (a) has a molecular weight (Mw) retention of at least 70% after 1000 hours of heat aging at a temperature of 85 °C and 85% relative humidity; and
Mw is determined using a Waters e2695 high-performance liquid chromatography (HPLC) system using a hexafluoro-2-propanol/chloroform solvent at 35 °C.

Aspect 15. An article comprising the thermoplastic composition according to any of Aspects 1 to 14.

Aspect 16. The article according to Aspect 15, wherein the article is a building material, a personal accessory, an energy storage device, an electrical device, or a vehicle interior.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Example and comparative compositions described herein included one or more of the following components:

**Table 1 - Components Used in Example and/or Comparative Compositions**

| Component | Description | CAS No. | Source | Function |
|---|---|---|---|---|
| PC homopolymer | PCP 1300 100 GRADE PCP Polycarbonate | 111211-39-3 | SABIC | Resin |
| PC copolymer 1 | PCP caped 20/80 ITR/PC copolymer polyestercarbonate with resorcinol units | 235420-85-6 | SABIC | Resin |
| PC copolymer 2 | PCP caped, 20% Siloxane/PC copolymer | 202483-49-6 | SABIC | Resin |
| PC copolymer 3 | PCP caped, 40% Siloxane/PC copolymer | 202483-49-6 | SABIC | Resin |
| PBT | 315 PBT polybutylene terephthalate | 26062-94-2 | SABIC | Resin |
| FR-245 | 2,4,6-Tris-(2,4,6-tribromophenoxy)-1,3,5-triazine | 25713-60-4 | ICL | Flame retardant |
| BPADP | Bisphenol-A bis(diphenyl phosphate) | 5945-33-5 | ADEKA | Flame retardant |
| $Sb_2O_3$/PBT | $Sb_2O_3$/PBT 80/20 wt% | 1309-64-4, 26062-94-2 | SABIC | FR synergist |
| Acrylic polymer | Core shell acrylic polymer | 31261-08-2, 25852-37-3 | DOW | Impact modifier |
| $TiO_2$ | Titanium Dioxide | 13463-67-7 | Kronos | Filler |
| Boehmite | Boehmite/aluminum oxide hydroxide mineral | 1318-23-6 | Estone | Filler |

(continued)

| Component | Description | CAS No. | Source | Function |
|---|---|---|---|---|
| IRGANOX 1010 | Pentaerythritol tetrakis (3,5-di-tert-butyl-4-hydroxyhydrocinnamate) | 6683-19-8 | BASF | Antioxidant |
| AO 412S | Pentaerythritol tetrakis-(3-dodecylthiopropionate) | 29598-76-3 | ADEKA | Antioxidant |
| PETS | Pentaerythritol tetrastearate | 115-83-3 | FACI | Mold release |
| UV234 | Hydroxyphenyl benzotriazole | 70321-86-7 | BASF | UV additive |
| MZP | Mono zinc phosphate | 13598-37-3 | Budenheim | Quencher |
| Joncryl ADR 4468 | Epoxy chain extender | 01-00-2 | BASF | Chain extender |
| TSAN | PTFE-encapsulated styrene acrylonitrile copolymer | 9002-84-0, 9003-54-7 | SABIC | Flame retardant |
| CB | Carbon black | 1333-86-4 | CABOT | Colorant |

The pellet compounding process was implemented on lab twin-screw extruder (Coperion ZSK-26Mc) with all components fed from main throat. The compounding proceeded under screw rotation at 200 revolutions per minute (rpm) a throughput of 20 kilograms per hour (kg/h). Temperature profiles of the extruder are shown in Table 2:

**Table 2 - Compounding Temperature Profiles**

| | |
|---|---|
| Compounder Type | ZSK-26Mc |
| Barrel Size (mm) | 1000 |
| Die (mm) | 4.4 |
| Feed Temperature (°C) | |
| Zone 1 | 50 |
| Zone 2 | 100 |
| Zone 3 | 200 |
| Zone 4 | 260 |
| Zone 5 | 260 |
| Zone 6 | 260 |
| Zone 7 | 260 |
| Zone 8 | 260 |
| Zone 9 | 260 |
| Zone 10 | 260 |
| Zone 11 | 260 |
| Zone 12 | 260 |
| Die | 260 |

The samples were injection molded on a FANUC S-2000i molding machine to form bars for the mechanical tests. Injection molding conditions are shown in Table 3:

**Table 3 -Injection Molding Conditions**

| | |
|---|---|
| Pre-drying time (hour) | 4 |
| Pre-drying temperature (°C) | 120 |
| Zone 1 temperature (°C) | 260 |

(continued)

| | |
|---|---|
| Zone 2 temperature (°C) | 260 |
| Zone 3 temperature (°C) | 260 |
| Nozzle temperature (°C) | 260 |
| Mold temperature (°C) | 80 |

Specific gravity was evaluated according to ASTM D792. Melt flow rate 1 (MFR1) was evaluated at 250 °C with a 5 kilogram (kg) load and melt flow rate 2 (MFR2) was evaluated at 300 °C with a 1.2 kg load. MFR was determined according to ASTM D1238. Tensile tests were evaluated at a speed of 50 millimeters per minute (mm/min) according to ASTM D638. Flexural testing was performed at a speed of 1.27 mm/min according to ASTMD790. Notched Izod impact (NII) testing was evaluated according to ASTM D256 at the temperatures indicated in Table 4B. Heat distortion temperature (HDT) performance was evaluated at a 1.82 megapascal (MPa) load on a 3.2mm thick bar according to ASTM D648. Flame retardancy (Vx) was evaluated using 1.0 mm thick bars according to UL94. Molecular weight (MW) was determined using a Waters e2695 high-performance liquid chromatography (HPLC) system using a hexafluoro-2-propanol/chloroform solvent at 35 °C.

Hydro-aging (DH85 aging) was performed at a temperature of 85 °C and a relative humidity (RH) of 85% at durations of 250 hours (hrs), 500hrs and 1000hrs. NII and were evaluated at each time threshold.

Example and comparative compositions were prepared according to Table 4A; properties of the compositions are listed in Table 4B:

**Table 4A - Example and Comparative Compositions**

| Component | C1 | Ex1 | C2 | C3 | Ex2 |
|---|---|---|---|---|---|
| PC homopolymer | 56.99 | 54.99 | 46.99 | 44.99 | 44.99 |
| PC copolymer 1 | | | 10 | 10 | 10 |
| PBT | 15 | 15 | 15 | 15 | 15 |
| FR-245 | 10 | 10 | 10 | 10 | 10 |
| $Sb_2O_3$/PBT | 3.5 | 3.5 | 3.5 | 3.5 | 3.5 |
| Acrylic polymer | 12.5 | 12.5 | 12.5 | 12.5 | 12.5 |
| $TiO_2$ | | | | 2 | |
| Boehmite | | 2 | | | 2 |
| IRGANOX 1010 /AO 412S / PETS / UV234 / MZP / Joncryl ADR 4468 / CB | 1.61 | 1.61 | 1.61 | 1.61 | 1.61 |
| TSAN | 0.4 | 0.4 | 0.4 | 0.4 | 0.4 |
| Total (wt%) | 100 | 100 | 100 | 100 | 100 |

**Table 4B - Properties of Table 4A Compositions**

| Property/Unit | | C1 | Ex1 | C2 | C3 | Ex2 |
|---|---|---|---|---|---|---|
| Specific gravity | $g/cm^3$ | 1.27 | 1.29 | 1.27 | 1.29 | 1.29 |
| MFR1 | g/10min | 15.9 | 4.6 | 14.8 | 11.8 | 2.1 |
| MFR2 | g/10min | 19.4 | 17.5 | 21.3 | 16.2 | 14.0 |
| Tensile modulus | MPa | 2097 | 2149 | 2054 | 2098 | 2080 |
| Flexural modulus | MPa | 2152 | 2095 | 2100 | 2130 | 2100 |
| Flexural strength at Yield | MPa | 78.6 | 76.6 | 77.6 | 77.6 | 77.2 |
| HDT | °C | 84.2 | 87.9 | 84.7 | 84.5 | 88.3 |

(continued)

| Property/Unit | | C1 | Ex1 | C2 | C3 | Ex2 |
|---|---|---|---|---|---|---|
| Notched Izod impact (RT, 25 °C) | J/m | 796 | 807 | 795 | 749 | 785 |
| Notched Izod impact -20 °C | J/m | 351 | 612 | 380 | 319 | 618 |
| Notched Izod impact -30 °C | J/m | 281 | 282 | 249 | 250 | 272 |
| Notched Izod impact -40 °C | J/m | 200 | 215 | 178 | 162 | 193 |
| Molecular weight (Mw) | PC | 48262 | 47854 | 41601 | 42484 | 43635 |
| | | | | | | |
| V0 at 1.0 mm, normal | p(FTP) | >0.95 | >0.99 | >0.99 | >0.99 | >0.99 |
| | FOT 10(s) | 56.9 | 54.7 | 47.8 | 44.2 | 51.2 |
| V0 at 1.0 mm, aging | p(FTP) | >0.95 | >0.99 | >0.99 | >0.99 | >0.99 |
| | FOT 10(s) | 61.6 | 54.2 | 58.7 | 45.1 | 49.9 |
| **DH85 aging** | | | | | | |
| NII RT, 250h, (Retention) | J/m (%) | 599 (75.2%) | 651 (80.7%) | 578 (72.7%) | 560 (74.8%) | 655 (83.4%) |
| NII RT, 500h, (Retention) | J/m (%) | 489 (61.4%) | 610 (75.6%) | 540 (67.9%) | 413 (68.5%) | 612 (78.0%) |
| NII RT, 1000h, (Retention) | J/m (%) | 42.1 (5.3%) | 473 (58.6%) | 37.0 (4.7%) | 47.0 (6.3%) | 170 (21.7%) |
| Mw, 250h, (Retention) | PC | 40635 (84.2%) | 41832 (87.4%) | 35666 (85.7%) | 35570 (83.7%) | 39736 (91.1%) |
| | | | | | | |
| Mw, 500h, (Retention) | PC | 36262 (75.1%) | 39390 (82.3%) | 33704 (81.0%) | 30952 (72.9%) | 34861 (79.9%) |
| | | | | | | |
| Mw, 1000h, (Retention) | PC | 28156 (58.3%) | 33232 (69.4%) | 27826 (66.9%) | 29658 (69.8%) | 31777 (72.8%) |
| | | | | | | |

As shown in the data, addition of an aluminum oxide hydroxide (boehmite) filler improved impact (NII) performance of the composition at low temperatures of -20 °C, - 30 °C and -40 °C (compare C1 to Ex1, C2 to Ex2 and C3 to Ex3). This trend was observed even with inclusion of another filler ($TiO_2$) in the composition. Additionally, comparing C3 ($TiO_2$) to Ex2 (boehmite), an improvement in NII was observed at room temperature (25 °C) in addition to all low temperature conditions. It is believed that the well-dispersed layered structure of aluminum oxide hydroxide (e.g., boehmite) may prevent cracks (e.g., the notch in the NII test) from growing, especially at the low temperature testing conditions.

It was also observed that inclusion of an aluminum oxide hydroxide filler could improve the hydro-stability of the PC/PBT composition, as evidenced by the improved NII performance and molecular weight (Mw) retention after the DH85 heat/humidity aging treatment. Each of compositions Ex1, Ex2 and Ex3 had improved NII retention and Mw retention as compared to their respective comparative compositions. Specifically compare Ex1 to C1, C2 to Ex2 and C3 to Ex3. It is believed that the aluminum oxide hydroxide may help to neutralize the acid group in the PBT and quencher, which reduces/slows the degradation of the polymer chains.

An improvement in flame retardancy (FR) properties was also observed with the compositions including aluminum oxide hydroxide - for example Ex1 had a higher p(FTP) value and a lower flame-out time (FOT) both before and after aging as compared to comparative composition C1.

Finally, it was observed that there was similar performance of mechanical properties such as modulus, strength and HDT, in the example compositions compared to the comparative compositions.

Additional example and comparative compositions were prepared according to Tables 5A and 6A; properties of the compositions are listed in Tables 5B and 6B:

**Table 5A - Example and Comparative Compositions**

| Component | Ex3 | C4 | C5 | Ex4 | Ex5 |
|---|---|---|---|---|---|
| PC homopolymer | 42.99 | 56.323 | 56.275 | 55.99 | 51.99 |
| PC copolymer 1 | 10 | | | | |
| PBT | 15 | 15 | 15 | 15 | 15 |
| FR-245 | 10 | 10 | 10 | 10 | 10 |
| $Sb_2O_3$/PBT | 3.5 | 3.5 | 3.5 | 3.5 | 3.5 |
| Acrylic polymer | 12.5 | 12.5 | 12.5 | 12.5 | 12.5 |
| $TiO_2$ | 2 | | | | |
| Boehmite | 2 | 0.667 | 0.715 | 1 | 5 |
| IRGANOX 1010 /AO 412S / PETS / UV234 / MZP / Joncryl ADR 4468 / CB | 1.61 | 1.61 | 1.61 | 1.61 | 1.61 |
| TSAN | 0.4 | 0.4 | 0.4 | 0.4 | 0.4 |
| Total (wt%) | 100 | 100 | 100 | 100 | 100 |

**Table 5B - Properties of Table 5A Compositions**

| Property/Unit | | Ex3 | C4 | C5 | Ex4 | Ex5 |
|---|---|---|---|---|---|---|
| Specific gravity | $g/cm^3$ | 1.31 | 1.27 | 1.27 | 1.28 | 1.31 |
| MFR1 | g/10min | 2.8 | 10.3 | 7.6 | 6.0 | 3.9 |
| MFR2 | g/10min | 16.1 | 18.2 | 14.8 | 15.8 | 16.7 |
| Tensile modulus | MPa | 2118 | 2119 | 2161 | 2146 | 2289 |
| Flexural modulus | MPa | 2130 | 2100 | 2090 | 2080 | 2220 |
| Flexural strength at Yield | MPa | 77.2 | 78.1 | 77.9 | 77.4 | 79.6 |
| HDT | °C | 85.9 | 86.5 | 89.1 | 90.2 | 90.7 |
| Notched Izod impact (RT, 25 °C) | J/m | 770 | 741 | 686 | 700 | 691 |
| Notched Izod impact -20 °C | J/m | 306 | 278 | 270 | 290 | 231 |
| Notched Izod impact -30 °C | J/m | 244 | 212 | 218 | 229 | 176 |
| Notched Izod impact -40 °C | J/m | 163 | 156 | 150 | 179 | 143 |
| Molecular weight (Mw) | PC | 43003 | 45168 | 46199 | 46208 | 45212 |
| | | | | | | |
| V0 at 1.0 mm, normal | p(FTP) | >0.99 | >0.99 | >0.99 | >0.99 | 1.0 |
| | FOT 10(s) | 48.3 | 34.2 | 43.1 | 33.8 | 28.5 |
| V0 at 1.0 mm, aging | p(FTP) | >0.99 | >0.99 | >0.99 | >0.99 | 1.0 |
| | FOT 10(s) | 48.2 | 38.3 | 32.8 | 29.2 | 30.2 |

(continued)

| DH85 aging | | | | | | |
|---|---|---|---|---|---|---|
| NII RT, 250h, (Retention) | J/m (%) | 628 (81.6%) | 552 (74.5%) | 530 (77.3%) | 549 (78.4%) | 538 (77.9%) |
| NII RT, 500h, (Retention) | J/m (%) | 585 (76.0%) | 407 (54.9%) | 294 (42.9%) | 455 (65.0%) | 404 (58.5%) |
| NII RT, 1000h, (Retention) | J/m (%) | 154 (20.0%) | 54 (7.3%) | 53 (7.7%) | 76 (10.9%) | 111 (16.1 %) |
| Mw, 250h, (Retention) | PC | 37339 (86.8%) | 40571 (89.8%) | 41528 (89.9%) | 42437 (91.8%) | 41343 (91.4%) |
| | | | | | | |
| Mw, 500h, (Retention) | PC | 36075 (83.9%) | 37771 (83.6%) | 38570 (83.5%) | 38969 (84.3%) | 37581 (83.1%) |
| | | | | | | |
| Mw, 1000h, (Retention) | PC | 31819 (74.0%) | 32583 (72.1%) | 35037 (75.8%) | 34490 (74.6%) | 33506 (74.1%) |
| | | | | | | |

**Table 6A - Example and Comparative Compositions**

| Component | C6 | C7 | Ex6 | Ex7 | Ex8 |
|---|---|---|---|---|---|
| PC homopolymer | 45.03 | 57.53 | 43.03 | 41.03 | 55.53 |
| PC copolymer 2 | 25 | | 25 | 25 | |
| PC copolymer 3 | | 12.5 | | | 12.5 |
| PBT | 20 | 20 | 20 | 20 | 20 |
| BPADP | 8.5 | 8.5 | 8.5 | 8.5 | 8.5 |
| Boehmite | | | 2 | 4 | 2 |
| IRGANOX 1010 / AO 412S / PETS / UV234 / MZP / Joncryl ADR 4468 / CB | 0.67 | 0.67 | 0.67 | 0.67 | 0.67 |
| TSAN | 0.8 | 0.8 | 0.8 | 0.8 | 0.8 |
| Total (wt%) | 100 | 100 | 100 | 100 | 100 |

**Table 6B - Properties of Table 6A Compositions**

| Property/Unit | | C6 | C7 | Ex6 | Ex7 | Ex8 |
|---|---|---|---|---|---|---|
| Specific gravity | $g/cm^3$ | 1.21 | 1.22 | 1.23 | 1.24 | 1.23 |
| MFR1 | g/10min | 14.5 | 14.5 | 4.6 | 4.5 | 4.3 |
| MFR2 | g/10min | 15.8 | 17.7 | 6.7 | 7.4 | 8.0 |
| Tensile modulus | MPa | 2471 | 2380 | 2500 | 2561 | 2427 |
| Flexural modulus | MPa | 2500 | 2460 | 2590 | 2630 | 2510 |
| Flexural strength at Yield | MPa | 95.6 | 93.6 | 96.2 | 95.8 | 91.9 |
| HDT | °C | 84.2 | 87.9 | 84.7 | 84.5 | 88.3 |
| Notched Izod impact (RT, 25 °C) | J/m | 333 | 846 | 658 | 533 | 980 |

(continued)

| Property/Unit | | C6 | C7 | Ex6 | Ex7 | Ex8 |
|---|---|---|---|---|---|---|
| Notched Izod impact 0 °C | J/m | 99 | 789 | 406 | 293 | 854 |
| Notched Izod impact -30 °C | J/m | 87 | 501 | 126 | 109 | 517 |
| Molecular weight (Mw) | PC | 56461 | 58731 | 57349 | 57118 | 59722 |
| V1 at 1.2mm, normal | p(FTP) | >0.80 | >0.95 | >0.85 | >0.75 | >0.5 |
| | FOT 10(s) | 113.4 | 80.8 | 139.2 | 179.7 | 254.0 |
| V1 at 1.2 mm, aging | p(FTP) | >0.95 | >0.95 | >0.95 | >0.85 | >0.5 |
| | FOT 10(s) | 102.7 | 89.9 | 94.5 | 108.2 | 208.1 |
| **DH85 aging** | | | | | | |
| NII RT, 250h, (Retention) | J/m (%) | 33 (9.9%) | 37 (4.4%) | 60 (9.1%) | 64 (12.0%) | 392 (40.0%) |
| NII RT, 500h, (Retention) | J/m (%) | 13 (3.9%) | 11 (1.3%) | 46 (7.0%) | 47 (8.8%) | 83 (8.5%) |
| Mw, 250h, (Retention) | PC | 30188 (53.5%) | 28142 (47.9%) | 47652 (83.1%) | 47581 (83.3%) | 48012 (80.4%) |
| Mw, 500h, (Retention) | PC | 13201 (23.4%) | 12537 (21.3%) | 38103 (66.4%) | 38775 (67.9%) | 35464 (59.4%) |

The compositions of Table 5A have varying amounts of aluminum hydroxide oxide and flame retardant, including weight ratios of flame retardant component to the aluminum hydroxide oxide component of from 2:1 to 10:1.

As seen in Table 5B, composition C4 had a weight ratio of flame retardant component (FR245, a brominated FR) to aluminum hydroxide oxide component (boehmite) of 15:1; this composition had an NII Retention (RT, 1000h) of less than 10%. Similarly, composition C5 had a weight ratio of flame retardant component (FR245, a brominated FR) to aluminum hydroxide oxide component (boehmite) of 14:1; this composition also had an NII Retention (RT, 1000h) of less than 10%. In contrast, composition Ex4 had a weight ratio of flame retardant component (FR245, a brominated FR) to aluminum hydroxide oxide component (boehmite) of 10:1 and an NII Retention (RT, 1000h) of greater than 10%. Similarly, composition Ex5 had a weight ratio of flame retardant component (FR245, a brominated FR) to aluminum hydroxide oxide component (boehmite) of 2:1 and an NII Retention (RT, 1000h) of greater than 10%.

The compositions of Table 6A had a phosphorus FR retardant (BPADP). As shown in Table 6B, composition C6 included a phosphorus FR component but no aluminum hydroxide oxide (boehmite) component, and had a low NII Retention (RT, 500h) of 3.9%. Similarly, composition C7 included a phosphorus FR component but no boehmite, and had a very low NII Retention (RT, 500h) of 1.3%. Composition Ex6 included a phosphorus FR component and aluminum hydroxide oxide at a weight ratio of 4.25:1; this composition had an NII Retention (RT, 500h) of 7.0%. Composition Ex7 included a phosphorus FR component and aluminum hydroxide oxide at a weight ratio of 2.25:1; this composition had an NII Retention (RT, 500h) of 8.8%. Finally, Ex8 included a phosphorus FR component and aluminum hydroxide oxide at a weight ratio of 4.25:1; this composition had an NII Retention (RT, 500h) of 8.5%.

Accordingly, in phosphorous FR systems, it was observed that NII and Mw retention were improved with the addition of an aluminum hydroxide oxide component. The improvement was not as high as the compositions including a bromine-based FR component, but was still substantially improved over the comparative compositions that did not include aluminum hydroxide oxide. The compositions including a phosphorous FR component and aluminum hydroxide oxide component had a NII retention at RT and 500 hours of at least 4% and a Mw retention at 500 hours of at least 25%.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed

Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   (a) from about 35 wt% to about 65 wt% of a polycarbonate homopolymer component;
   (b) from about 0.1 wt% to about 30 wt% of a polybutylene terephthalate component;
   (c) from about 0.1 wt% to about 5 wt% of an aluminum hydroxide oxide component; and
   (d) from about 0.1 wt% to about 20 wt% of a flame retardant (FR) component,

   wherein the combined weight percent value of all components does not exceed 100 wt%, and all weight percent values are based on the total weight of the composition.

2. The thermoplastic composition according to claim 1, wherein the aluminum hydroxide oxide component comprises boehmite.

3. The thermoplastic composition according to claim 1 or 2, wherein a weight ratio of the flame retardant component to the aluminum hydroxide oxide component is from 2:1 to 10:1.

4. The thermoplastic composition according to any of claims 1 to 3, wherein the composition further comprises from greater than 0 wt% to about 30 wt% of a polycarbonate copolymer component.

5. The thermoplastic composition according to claim 4, wherein the polycarbonate copolymer component comprises from about 15-25 mole % ITR ester units and from about 75-85 mole % polycarbonate monomer units.

6. The thermoplastic composition according to claim 4, wherein the polycarbonate copolymer component comprises a polycarbonate-siloxane copolymer, wherein the polycarbonate-siloxane copolymer has a siloxane content of from about 5 wt% to about 45 wt%, based on the total weight of the polycarbonate-siloxane copolymer component.

7. The thermoplastic composition according to any of claims 1 to 6, wherein the composition comprises from greater than 0 wt% to about 20 wt% of an impact modifier component.

8. The thermoplastic composition according to claim 7, wherein the impact modifier component comprises a core-shell acrylic polymer.

9. The thermoplastic composition according to any of claims 1 to 8, wherein the FR component comprises a brominated FR component, a phosphorus FR component, or a combination thereof.

10. The thermoplastic composition according to any of claims 1 to 9, wherein the composition further comprises from greater than 0 wt% to about 2 wt% of an additional FR component comprising a polytetrafluoroethylene (PTFE) component.

11. The thermoplastic composition according to any of claims 1 to 10, wherein the composition further comprises at least one additional additive, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a reinforcing agent, or a combination thereof.

12. The thermoplastic composition according to any of claims 1 to 11, wherein the composition has:

    (a) a notched Izod impact strength (NII) retention of at least 75% after 250 hours of heat aging at a temperature of 85 °C and 85% relative humidity;
    (b) an NII retention of at least 55% after 500 hours of heat aging at a temperature of 85 °C and 85% relative humidity; or

(c) an NII retention of at least 10% after 1000 hours of heat aging at a temperature of 85 °C and 85% relative humidity,

wherein NII is evaluated according to ASTM D256 at 25 °C.

**13.** The thermoplastic composition according to any of claims 1 to 12, wherein:

the composition comprises from greater than 0 wt% to about 20 wt% of a polycarbonate copolymer component;
the polycarbonate homopolymer component (a) has a molecular weight (Mw) retention of at least 70% after 1000 hours of heat aging at a temperature of 85 °C and 85% relative humidity; and
Mw is determined using a Waters e2695 high-performance liquid chromatography (HPLC) system using a hexafluoro-2-propanol/chloroform solvent at 35 °C.

**14.** An article comprising the thermoplastic composition according to any of claims 1 to 13.

**15.** The article according to claim 14, wherein the article is a building material, a personal accessory, an energy storage device, an electrical device, or a vehicle interior.

Europäisches Patentamt
European Patent Office
Office européen des brevets

# EUROPEAN SEARCH REPORT

Application Number
EP 23 21 1076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/081557 A1 (GUO MINGCHENG [CN]) 17 March 2022 (2022-03-17) * paragraphs [0017], [0022], [0096]; claims 1,13; example 1; table 2 * ----- | 1-15 | INV. C08L69/00 |

TECHNICAL FIELDS SEARCHED (IPC)

C08L
C09J

The present search report has been drawn up for all claims

1

| Place of search | Date of completion of the search | Examiner |
|---|---|---|
| The Hague | 9 April 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 1076

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| US 2022081557 A1 | 17-03-2022 | CN 113574113 A | 29-10-2021 |
| | | EP 3686245 A1 | 29-07-2020 |
| | | EP 3914647 A1 | 01-12-2021 |
| | | US 2022081557 A1 | 17-03-2022 |
| | | WO 2020152650 A1 | 30-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *CHEMICAL ABSTRACTS*, 80-05-7